# EUROPEAN PATENT APPLICATION

(11) **EP 4 589 138 A1**
(43) Date of publication of application: **23.07.2025**
(21) Application number: 24152128.5
(22) Date of filing: 16.01.2024
(51) Int. Cl.: F03D 7/02, F03D 13/10

(54) **WIND TURBINE ROTOR POSITIONING**

(71) Applicant: Siemens Gamesa Renewable Energy A/S, 7330 Brande (DK)
(72) Inventor: Alberts, Johannes Gerhardes Wardjan, 2660 Brøndby Strand (DK); Godridge, Paul, Cheadle, SK8 7HX (GB); Lucas Macleod, Edgar, Glasgow, G41 3TY (GB)
(74) Representative: SGRE-Association

(57) **Abstract**

A method of operating a wind turbine for positioning a wind turbine rotor of the wind turbine is provided. The wind turbine (100) comprises an electrical generator (10) mechanically coupled to the wind turbine rotor (101) and a power converter system (20), wherein the power converter system (20) comprises at least two parallel power converters (21, 22) providing two parallel paths for exchanging electrical power with the electrical generator (10). The method comprises controlling the power converter system (20) to supply electrical power to the electrical generator (10) to operate the electrical generator as a motor, and upon detecting a failure of a power converter (21) of the power converter system (20), controlling the power converter system (20) to maintain operation of at least one other power converter (22) of the power converter system (20) to continue supplying electrical power to the electrical generator (10) to continue generating torque that is applied to the wind turbine rotor (101).

## Description

### FIELD OF THE INVENTION

The present invention relates to a method of operating a wind turbine for positioning a wind turbine rotor of the wind turbine. It further relates to a respective wind turbine control system and to a respective computer program.

### BACKGROUND

Rotor blades are mounted to a hub of a wind turbine rotor often by orienting the rotor blade in a horizontal direction. The blade mount on the hub is thus positioned at an angular position of 90° (0° referring to the mount oriented vertically upwards) and the bolts extending from the mounting flange of the blade are aligned with respective mounting holes in the blade mount on the hub. Such assembly accordingly requires an angular positioning of the hub. Conventionally, a dedicated rotor turning tool is transported into the nacelle and then assembled and mounted to rotate the hub. Such procedure is however time-consuming and costly and further requires the purchase and maintenance of the rotor turning tool. The additional time required for installation and operation of the tool may delay wind turbine installation.

To obtain a desired angular position of the hub, it is also possible to use the generator of the wind turbine as a motor to position the hub at the desired angle for mounting a rotor blade. For mounting the first blade, the hub may be positioned at an angle of 90° and locked by rotor lock pins. For mounting the second rotor blade, the rotor lock pins may again be removed and the hub with one blade is rotated to the next position for receiving the second rotor blade. In view of the imbalance when one or two blades are installed on a three-blade rotor hub, relatively large torques are required to be generated by the electrical generator of the wind turbine to rotate the hub. Upon occurrence of a failure in the electrical system of the wind turbine, the torque applied by the generator is lost, typically within a millisecond. If a large torque is applied to rotate such imbalanced hub, the drop of the torque may result in a large step response that can lead to blade damage. If only one blade is mounted to the hub, the entire torque drop may need to be absorbed by such single blade, while the inertia of the rotor is relatively low.

Such blade damage is costly and will further delay the installation process as the rotor blade needs to be taken down for repair. Two solutions have emerged to deal with this problem. In one solution, the above-mentioned rotor turning tool is continued to be used to avoid such damage, with the associated added cost and installation time. As a second solution, the rotor blades have been reinforced to withstand the loads acting in such situation. Although such reinforcements avoid damage to the blade, they are more costly to produce and result in a heavier blade that increases the load applied to all supporting components. This may reduce the lifetime or increase a risk of failure due to fatigue of the respective components.

### SUMMARY

Accordingly, there is a need to mitigate at least some of the drawbacks mentioned above and in particular to reduce the risk of blade damage without the above-mentioned associated disadvantages. It is in particular desirable to reduce the time and cost associated with hub positioning.

This need is met by the features of the independent claims. The dependent claims describe examples of the invention.

According to an aspect of the invention, a method of operating a wind turbine for positioning a wind turbine rotor is provided. The wind turbine comprises an electrical generator mechanically coupled to the wind turbine rotor and a power converter system. The power converter system comprises at least two parallel power converters that provide two parallel paths for exchanging electrical power with the electrical generator. The method comprises controlling the power converter system (in particular the at least two parallel two power converters) to supply electrical power to the electrical generator to operate the electrical generator as a motor. The supply of electrical power is controlled such that the electrical generator generates a torque that is applied to the wind turbine rotor to position the wind turbine rotor, in particular to turn the wind turbine rotor and/or to maintain a position of the wind turbine rotor. The method further comprises, upon detecting a failure of a power converter of the power converter system, controlling the power converter system to maintain operation of at least one other power converter of the power converter system to continue supplying electrical power to the electrical generator to continue generating torque that is applied to the wind turbine rotor.

By such method, the positioning of the rotor may be improved, and the risk of blade damage may be reduced significantly. By providing a parallel power converter system and by maintaining the operation of at least one power converter if another power converter fails, the drop in torque applied to the wind turbine rotor can be reduced significantly. The momentary impact on one or more blades of the wind turbine rotor may thus be reduced proportionally. Further, such continued operation of the at least one other power converter allows a gradual torque reduction. The step response experienced in conventional systems may thus be smoothed out, which significantly reduces the high-frequency content of the mechanical impact experienced by the rotor blade(s) on the wind turbine rotor due to the drop in torque. The method thus synergistically provides two ways in which the blade loading is lowered. This combined effect may ensure that the rotor blades do not need additional strengthening for being able to cope with the loading experienced during such failure of the power system of the wind turbine; in particular, no reinforcements of the blade may be necessary. The method may for example be performed during rotor blade installation, rotor blade removal, and/or any service operation where the rotor position (i.e. the angular position of the wind turbine rotor, in particular of the hub of the rotor) is changed. For example also for a balanced wind turbine rotor, the method may result in a benefit of allowing continued positioning of the wind turbine rotor even if one or more of the parallel power converters fails.

For example, a particular detrimental loading may be experienced by a rotor blade that is in a 90° position (horizontal) or close to such horizontal position. Loss of the torque applied by the generator may result in a so-called whiplash effect, that may be caused by the steep and step-shaped drop in applied torque. By the method, and in particular by reducing the step size and the high-frequency content of such step response, such whiplash effect may be reduced significantly and the resulting critical loading of the blade may be avoided. In general, if 0° is defined as an angle at which the rotor blade points upwards, and 180° is pointing downwards, a region of blade angle in which the risk of overloading the blade in a conventional system exists generally extends between 15 and 165° and, on the other side, between 195 and 345°. In these areas, the risk of blade damage in case of a converter fault may exist. The most critical loading generally occurs close to the blade tip, for example between about 70% and 100% of the blade span (0% being at the blade root). By maintaining operation of the at least one other power converter, such risk of blade damage may be reduced significantly.

The wind turbine rotor may in particular be an unbalanced wind turbine rotor. The wind turbine rotor may be an unbalanced rotor that may comprise less than a default number of rotor blades, but at least one rotor blade. For example, the method may be performed when installing or removing a rotor blade, which may result in an operation with a respective unbalanced wind turbine rotor.

The unbalanced wind turbine rotor may for example comprise a three blade hub and one or two mounted rotor blades. A drop in torque in such situation may result in a significant blade loading due to the imbalance, which may be avoided by the method. The method may of course be operated during the whole installation/removal procedure and may provide its benefits in case that a power converter is lost while the generator holds an unbalanced rotor. Similarly, during removal of rotor blades or during any service operation, this method may be applied and may achieve respective benefits.

The at least two parallel power converters may be connected in parallel by providing an electrical connection at their respective grid sides and their respective generator sides. It is also possible that on their generator side, the parallel power converters are connected to different generator windings. It is also possible that on their grid side, the parallel power converters are connected to different transformer windings. Combinations of such configurations are possible. In either case, the parallel power converters provide a parallel path for supplying electrical power from a power grid (or other source) to the generator or supplying electrical power received from the generator to the power grid.

The power converter system may receive the electrical power, which it converts and provides to the generator, from a power grid to which the wind turbine is coupled, and/or from another power source, such as from a power storage device, from a Diesel generator or other type of generator, or any other conceivable power source.

In an example, maintaining the operation of the at least one other power converter may comprise controlling the providing of electrical power to the generator by the at least one other power converter to gradually reduce the generated torque applied by the generator to the wind turbine rotor. Such gradual reduction may avoid a steep step response and may reduce high-frequency content of the mechanical response. The generated torque may for example be reduced to below a threshold value or to zero. After such reduction, the wind turbine rotor may then be allowed to find its equilibrium position in view of the applied gravitational torque, which will then be sufficiently damped by the inertia of the wind turbine rotor.

The method may further comprise controlling the power converter system to stop supplying electrical power to the generator after a stop criterion is met. The stop criterion may for example be at least one of: the torque generated by the generator dropping below a threshold or reaching a value of zero; a passing of a predetermined period of time; or an operating parameter, in particular a current provided to the generator, dropping below a threshold or reaching a value of zero. After such stopping of the power supply, only gravitational torque and rotational friction may act on the wind turbine rotor, so that the rotor will swing out. A large step response and resulting high-frequencies may be avoided.

In an example, maintaining operation of the at least one other power converter may comprise controlling the at least one other power converter to provide a constant voltage to the generator. Upon loss of a power converter, the control of the power converter system may be disturbed, and may result in the long run in control actions that lie outside of the nominal operating conditions of the individual power converters, or that may result in undesired effects. By setting the output voltage of the power converter to a constant value, a robust control may be achieved that allows the converter system to continue applying a (reduced) torque via the generator to the wind turbine rotor. The constant voltage may for example correspond to a voltage that the at least one other power converter has supplied to the generator prior to the failure of the (failed) power converter. In other words, the output voltage of the at least one other power converter may be frozen to its current value upon occurrence of the failure. The at least one other power converter may thus continue to supply electrical power to (at least temporarily) generate the same torque. Although the dynamic control of the converter system may no longer be operable in such situation, the generator will thus continue applying the torque in the right direction to the wind turbine rotor and thus essentially continues doing what it was doing prior to the failure. A robust and efficient reduction of the step response may thereby be achieved.

The constant voltage may be provided for a predetermined amount of time or until the torque generated by the generator drops below a predetermined threshold, in particular reaches a value of zero. This may constitute a respective stop criterion. In general, the torque generated by the generator will depend on the electrical angle of the generator rotor. If the voltage is kept constant, and the rotor moves due to gravity in view of the torque imbalance, the generated torque may start to change (in particular sinusoidally). Stopping the supply of the constant voltage for example at a respective zero crossing of the torque may thus have the benefit of avoiding that the direction of the torque generated by the generator reverses and actively drives the wind turbine rotor, i.e. it may be avoided that the applied torque does not brake but accelerate the rotor.

For example, the method may further comprise detecting or estimating a point in time at which the torque generated by the generator reaches a value of zero and stopping the providing of electrical power by the power converter to the generator upon detecting such zero value of the generated torque. Such detection or estimation may be based on parameters measured by the conventional converter control.

According to a further example, maintaining operation of the at least one other power converter may comprise controlling the at least one other power converter in accordance with an operating mode in which the power converter has been operated prior to detecting the failure. Such operating mode may for example be a dynamic voltage control operating mode in which the voltage provided to the generator is controlled dynamically. Such dynamic control may for example be based on an angular speed and/or angular position reference for the rotation of the wind turbine rotor. It may be in particular a dynamic feedback and/or feed-forward control. Such operation may allow that a relatively high torque is continued to be provided by the generator to the wind turbine rotor. The control may in particular attempt to maintain rotor position and/or rotor speed and may thus control the at least one other power converter to supply electrical power to the generator so as to generate a relatively high, in particular maximum, torque. The size of the step response due to loss of the failed power converter may thus further be reduced.

The controlling of the at least one other power converter in accordance with the operating mode may be performed for a predetermined period of time. Such period of time may for example be smaller than 1 second, 500 ms, 300 ms, or 200 ms. It may be between 50 ms and 300 ms, for example 100 ms. If control in the prior operating mode is continued, the rotation of the wind turbine rotor due to the torque imbalance (due to loss of the failed power converter) may disturb the control; in particular, rotor position may drift away from an expected rotor position on which such control may be based. Operating in the operating mode only for the predetermined period of time may thus have the advantage that the drift within such short period of time is relatively low, so that the conventional control in the operating mode may still cause the generator to generate the desired amount of torque.

In a further example, maintaining operation of the at least one other power converter may comprise controlling the at least one other power converter to ramp down a current provided by the at least one other power converter to the generator. By reducing the current provided to the generator, the torque that the generator is capable of producing may be reduced accordingly. By such ramping down of the current, the torque applied by the generator after a failure may thus be smoothly reduced, whereby further step responses and high-frequency content of the mechanical response may be avoided. Blade loading and risk of damage may thereby be reduced. For example, a current reference of a current control loop of the at least one other power converter may be reduced, e.g. in accordance with a predetermined characteristic. The ramp may in particular be a linear ramp or a non-linear ramp.

The current may for example be ramped down to below a threshold or to a value of zero. The ramping down may for example occur within a predetermined period of time. Such period of time may be preferably smaller than 1 second, 500 ms, 300 ms, or 200 ms. For example, the predetermined period of time may be between 50 ms and 300 ms, such as 100 ms or 200 ms. Ramping down the current, and thus the applied torque, within such time frame may avoid the loading and high-frequency content associated with a step response while reducing the risk for further converter damage due to overloading. For example, a slope, in particular a linear slope, of the current ramp may be adapted to reach a value of zero current within the predetermined time period.

It should be clear that the above-mentioned methods of controlling the at least one other power converter can be combined in order to achieve a beneficial control.

For example, maintaining operation of the at least one other power converter may comprise controlling the at least one other power converter in accordance with the operating mode for a first predetermined period of time and ramping down a current provided by the at least one other power converter to the generator within a second predetermined period of time following the first predetermined period of time. For example in a two-converter system in which the torque generated by the generator drops by 50% if one power converter is lost, the continued operation of the remaining power converter in the operating mode may maintain 50% of the torque during the first period of time irrespective of the azimuthal position of the wind turbine rotor. Then, in the second period of time, the current may be lowered from its actual value to zero, so that the resulting smooth torque reduction does not generate any additional blade loading.

In a further example, maintaining operation of the at least one other power converter may comprise controlling the at least one other power converter to provide the constant voltage to the generator for a first period of time and ramping down a current provided by the at least one other power converter to the generator after the first period of time. The first period of time may preferably be smaller than 1 second, 500 ms, 300 ms, or 200 ms. It may for example be between 50 ms and 200 ms. By holding the voltage constant for only a predetermined period of time, and thereafter ramping down the current, the need to detect a zero crossing of the torque may be avoided. As the current may simply be ramped down until it reaches zero, the timing of the control may be facilitated. The current may be ramped down in a second period of time, which may take any of the above-mentioned values. In particular, in any of the examples, the second period of time may for example be determined by a slope of a current ramp. The control may thus simply provide a particular slope of the current ramp and ramp the current down from its current value to a value of zero.

A second period of time, in which the current is ramped down to zero, may have a duration that is between 0.5 and two times the duration of the first period of time over which the voltage is being held constant. A relatively fast and efficient torque reduction that avoids large steps and reduces high-frequency content of the mechanical response may thereby be obtained. The duration of both time periods may be equal.

The wind turbine is preferably a direct drive wind turbine in which the generator is mechanically connected to the wind turbine rotor without an intervening gearbox. The method may develop particular benefits in such wind turbine configuration, as no intervening gearbox that may provide damping upon loss of torque from the generator is present.

According to a further aspect, a control system for controlling the operating of a wind turbine is provided. The wind turbine comprises a wind turbine rotor comprising at least one or two rotor blades, an electrical generator mechanically coupled to the wind turbine rotor, and a power converter system. The power converter system comprises at least two parallel power converters providing two parallel power paths for exchanging electrical power with the electrical generator. The control system is configured to perform any of the methods disclosed herein.

According to a further aspect of the invention, a respective wind turbine comprising such control system is provided.

According to a further aspect of the invention, a computer program for controlling the operation of a wind turbine that comprises a power converter system having at least two parallel power converters that provide two parallel paths for exchanging electrical power with an electrical generator of the wind turbine is provided. The computer program comprises control instructions which, when executed by a processing unit of a control system that controls the operation of the wind turbine, cause the processing unit to perform any of the methods disclosed herein. Such computer program, in particular the respective control instructions, may be provided on a volatile or non-volatile storage medium or data carrier, and/or may be provided via a communication connection, such as a wired or wireless network connection.

By such control system, wind turbine or computer program, advantages may be achieved that correspond to the advantages outlined further above with respect to the method.

It is to be understood that the features mentioned above and those yet to be explained below can be used not only in the respective combinations indicated, but also in other combinations or in isolation, without leaving the scope of the present invention. In particular, the features of the different aspects and examples of the invention can be combined with each other unless noted to the contrary.

### BRIEF DESCRIPTION OF THE DRAWINGS

The forgoing and other features and advantages of the invention will become further apparent from the following detailed description read in conjunction with the accompanying drawings. In the drawings, like reference numerals refer to like elements.
Fig. 1 is a schematic drawing showing a wind turbine according to an example of the invention.
Fig. 2 is a schematic drawing showing a control system of a wind turbine having parallel power converters according to an example of the invention.
Fig. 3 is a flow diagram of operating a wind turbine according to an example of the invention.
Fig. 4 is a diagram schematically illustrating a change in angular position of a wind turbine rotor upon failure of a power converter according to an example of the invention.
Fig. 5 is a diagram schematically illustrating torque generated by the generator of a wind turbine when operating according to different exemplary methods of the invention.
Fig. 6 is a flow diagram of an exemplary implementation of the step of maintaining operation of a parallel power converter of the method of figure 3.
Fig. 7 is a flow diagram of another exemplary implementation of the step of maintaining operation of a parallel power converter of the method of figure 3.
Fig. 8 is a flow diagram of another exemplary implementation of the step of maintaining operation of a parallel power converter of the method of figure 3.

### DETAILED DESCRIPTION

In the following, embodiments and/or examples of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

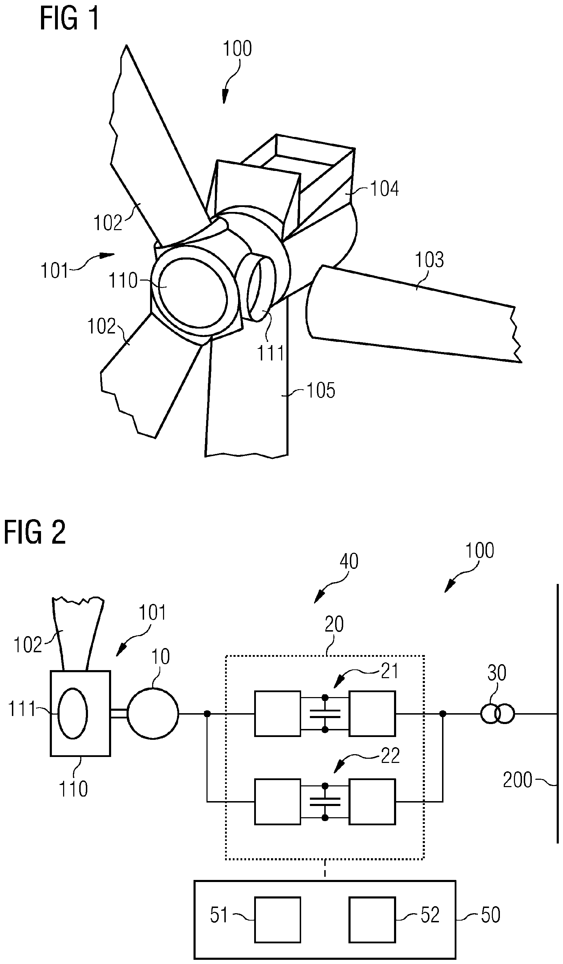

Fig. 1 schematically illustrates a wind turbine 100 having a tower 105 and a nacelle 104. A wind turbine rotor 101 of wind turbine 100 has two rotor blades 102 mounted to its hub 110. In Fig. 1, wind turbine 100 is shown during installation or removal of a third rotor blade 103. Hub 110 has been rotated to a position in which the blade mount 111 is oriented horizontally so that the rotor blade 103, which is suspended horizontally by a crane and yoke assembly (not shown) can be mounted to the blade mount 111 (or it may correspondingly be removed). If the angular position of wind turbine rotor 101 is to be considered to be 0° if the blade mount 111 points vertically upwardly, then the position shown in Fig. 1 corresponds to a 90° angular position.

It will be readily apparent that wind turbine rotor 101 is unbalanced, since the weight of the two rotor blades 102 acts on one side of the rotational axis of the rotor 101, thus causing a torque due to gravitation to be applied via rotor 101. Wind turbine 100 may be a direct drive wind turbine in which the wind turbine rotor 101 is mechanically connected to the wind turbine generator without intervening gearbox. The generator may be operated as a motor in order to generate a torque by means of which the wind turbine rotor 101 is brought into the position illustrated in Fig. 1. A significant amount of torque thus needs to be applied by the generator to the wind turbine rotor 101 to overcome the imbalance. During mounting of rotor blade 103, rotor 101 may be locked in position by respective locking pins. However, when loosening the locking pins and when changing the orientation of rotor 101, the gravitational torque applied by rotor 101 is borne by the generator. Accordingly, if the generator loses power supply and thus stops applying a torque, the wind turbine rotor 101 will experience an immediate and significant drop in torque, and thus a step response. As explained above, such sudden drop in torque is associated with a significant risk of blade damage. The high-frequency content of such step response and in particular the whiplash effect resulting from such sudden drop in torque may lead to significant structural loading of blades 102 and may lead to resulting damage.

The solution disclosed herein may avoid such sudden and large drop in torque by providing parallel power converters and continuing to supply electrical power to the generator, and thus to supply torque to the rotor 101 by the generator, upon failure of one of the parallel power converters.

Fig. 2 schematically illustrates a particular implementation of wind turbine 100 with an electrical power system 40 that comprises a generator 10, the converter system 20 and a wind turbine transformer 30. Generator 10 may be a permanent magnet generator, in particular a permanent magnet synchronous generator (PMSG). Transformer 30 is coupled to power grid 200 to exchange electrical power with a power grid and in particular to draw power from power grid 200 during operation of generator 10 as a motor. The converter system 20 comprises two or more parallel power converters 21, 22. These may be implemented as back-to-back converters, which may for example comprise a generator-side converter, a grid-side converter and an intermediate DC-link. Although two parallel power converters are shown, a larger number of parallel power converters may be present. The parallel power converters 21, 22 provide a parallel power path from the electrical power source (e.g. grid 200) to the generator 10. In the example of Fig. 2, the terminals of the generator-side converters are connected together, and the terminals of the grid-side converters are connected together to provide such parallel power path. In other examples, the terminals of the generator-side converters may be coupled to different generator windings of generator 10, and/or the terminals of the grid-side power converters may be coupled to different windings of the transformer 30. Also in such way, a parallel power path between the power source and generator 10 is established. Besides using power grid 200 as a power source, other power sources, such as Diesel-generators, power storage devices, fuel cells, and the like may be employed.

Converter system 20 is controlled by a control system 50. Control system 50 may be implemented as a single controller or may be distributed over several controllers. It may for example comprise a converter controller for the parallel power converters 21, 22 and may further comprise a wind turbine controller for controlling further functions of wind turbine 100. During installation (or removal) of the rotor blade 103, control system 50 may for example control the power converter system 20 in accordance with a position reference for the angular position of wind turbine rotor 101, and/or a speed reference for an angular velocity. The converter system 20 may thus be caused to provide electrical power to generator 10 such that generator 10 applies a torque which drives the rotor 101 to the reference angular position. Respective feedback control may be employed.

Control system 50 may comprise a processing unit 51 and a memory 52. Processing unit 51 may comprise any kind of processor, such as a microprocessor, an application-specific integrated circuit, a field-programmable gate array, a digital signal processor and the like. Memory 52 may comprise any kind of memory, such as RAM, ROM, EEPROM, Flash Memory, a hard-disk drive and the like. Control system 50 may comprise further components common to a computer system, such as respective input/output interfaces, a data communication bus for interconnecting the different components, and a user interface. Memory 52 may store control instructions to be executed by processing unit 51. Such control instructions may be configured to cause the control system 50 to perform any of the methods described herein.

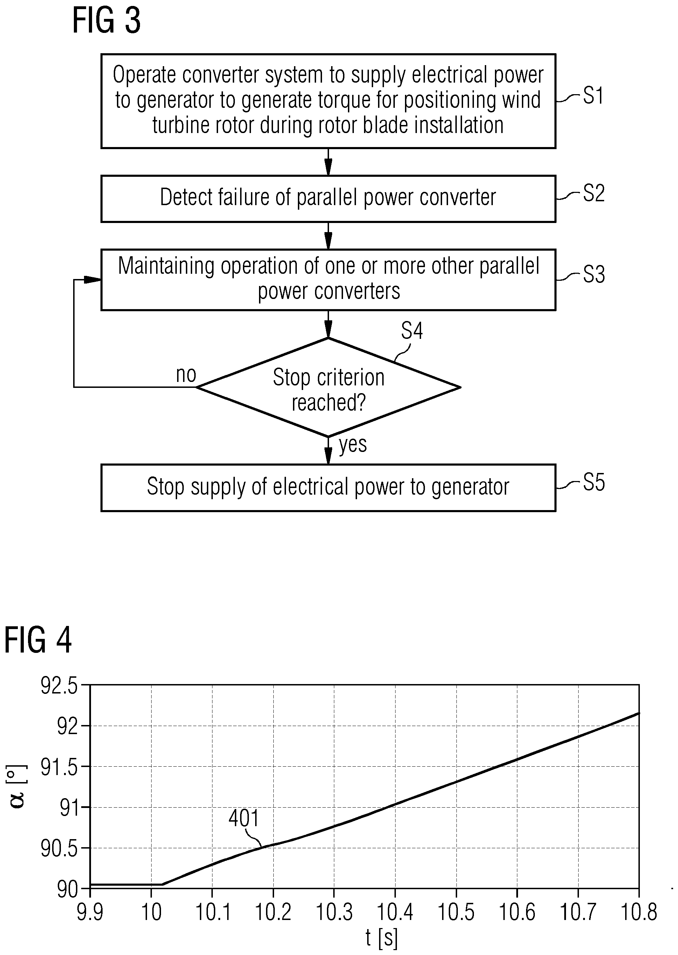

Fig. 3 illustrates a method according to an example, which may be performed by the control system 50. In step S1, the converter system 20 is operated to supply electrical power to the generator 10 to generate a torque for positioning wind turbine rotor during blade installation, for example for holding the unbalanced rotor at a particular angular position or for turning the unbalanced rotor to a desired angular position. Control system 50 may issue respective control commands to the converter system 20 to provide the respective operation.

Respective power converters are generally implemented with high-power semiconductor switches, which often suffer from excessive heat development when switching high currents. Accordingly, the risk of failure is particularly high for the power converters of power converter system 20 during such operation.

In step S2, a failure of the parallel power converter is detected. For example, it may be detected that converter 21 has failed. In a conventional converter system which employs parallel converters, a failure of one power converter will generally lead to the shutdown of the whole converter system, in particular to an emergency stop of the converter system.

In contrast, in the exemplary implementations of the present method, the operation of one or more other power converters (other than the failed power converter) of converter system 20 is maintained in step S3. The operation of, e.g., power converter 22 and optionally of one or more other parallel power converters (not shown) is continued after the failure. As a consequence, torque continues to be applied by generator 10 to the wind turbine rotor 101. The drop in torque experienced by rotor 101 may thus be reduced significantly.

It may further be checked in step S4 if a stop criterion for stopping the operation of the power converter system has been met (step S4). If not, then application of torque by the generator by means of continued operation of one or more of the remaining power converters continues in step S3. If the stop criterion has been reached in step S4, the supply of electrical power to the generator by the power converter system 20 is stopped in step S5. Preferably, the stop criterion is invoked if the torque generated by the generator 10 has reached a value of zero, which may be determined to be the case after the expiry of a predetermined period of time, or after a monitored operating parameter reaching or dropping below a threshold, such as a current supplied to the generator dropping to a value of zero, or by actually detecting that the torque generated by generator 10 has dropped to a value of zero. These are however only examples, and other stop criteria may be used. Although Fig. 3 is described with respect to rotor blade installation, it may correspondingly be performed for rotor blade removal or any other service operation requiring the positioning of the wind turbine rotor, in particular if the rotor is unbalanced.

Fig. 4 schematically illustrates the angular position α of rotor 101 in degrees. The horizontal axis shows the time in seconds. The angular position curve 401 shows that up to 10 seconds, the angular position of the rotor 101 is maintained at 90° by balancing the gravitational torque of rotor 101 with the torque generated by the generator 10. At 10 seconds, one of the parallel power converters is lost, resulting in a respective torque imbalance. As a consequence, the rotor 101 can no longer be held at the respective angular position, but starts to turn. However, since by the disclosed solution, a torque is still applied by the generator to the wind turbine rotor, the change in position occurs rather slowly and smoothly.

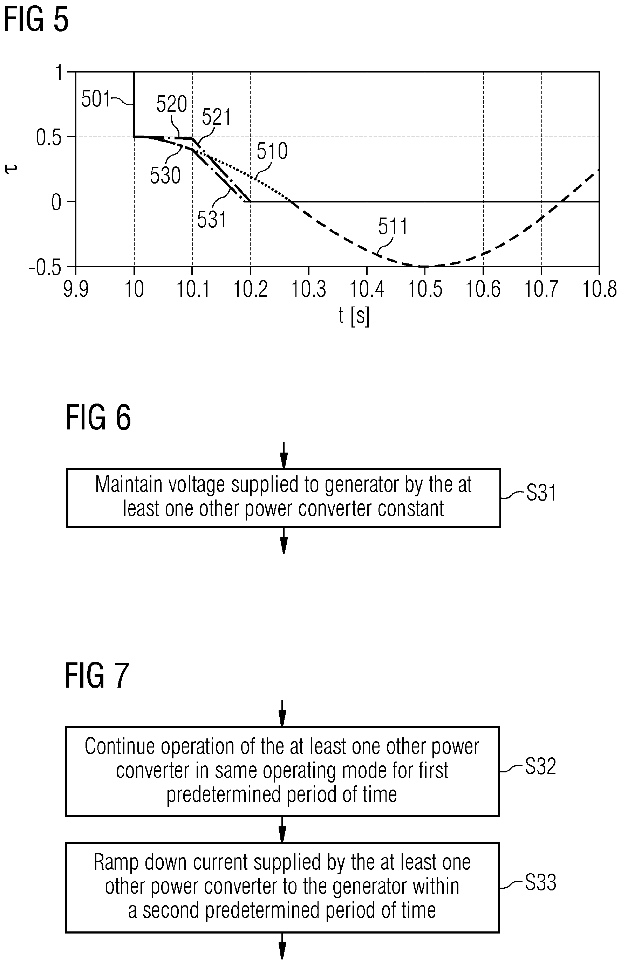

The step of maintaining the operation of one or more other parallel power converters in step S3 of Fig. 3 may be performed in different ways. Figs. 6, 7 and 8 illustrate different implementations of step S3 of Fig. 3, and Fig. 5 shows the resulting torque generated by the electrical generator 10 in response to a respective control of converter system 20. Fig. 5 shows on the horizontal axis the time in seconds corresponding to the time of Fig. 4. The vertical axis shows the torque τ generated by the generator 10 normalized to the torque generated prior to the fault. At the time of 10 seconds, the power converter 21 may for example fail. As a consequence, a drop 501 in the torque generated by generator 10 is observed, as generator 10 no longer receives electrical power from power converter 21.

In the example of Fig. 6, the step S3 of Fig. 3 comprises maintaining a voltage supplied to the generator 10 by the at least one other power converter (e.g. power converter 22) constant (step S31). In conventional operation, the voltage is dynamically controlled, e.g. using position feedback from rotor 101. As the rotor position starts to drift after the failure, as shown in Fig. 4, such control is no longer accurate so that keeping the voltage constant provides a robust way of continuing operation. However, as the generator torque depends on the electrical angle of the rotor, the generated torque starts to change and follows the sinusoidal curve 510 of Fig. 5. At some position of the rotor 101, the torque will become zero and will thereafter change sign (curve section 511), which would result in an unwanted acceleration of the rotor. Accordingly, the stop criterion of step S4 may be set such that the supply of electrical power by converter system 20 to generator 10 is stopped upon the generated torque reaching zero, i.e. upon a zero-crossing of curve 510. As a result, the applied torque gradually reduces to zero, so that the generation of high-frequency load components is avoided. Curve section 511 is only shown for the purpose of illustration but such torque will actually not be provided by generator 10.

Fig. 7 illustrates an alternative implementation of step S3 of Fig. 3. In step S32, the at least one other power converter, e.g. power converter 22, is continuing operation in the same operating mode as operated prior to the occurrence of the failure. In other words, it may continue to provide dynamic voltage control, for example based on positional feedback. As a consequence, the torque generated by generator 10 may stay relatively constant, at least over a short period of time in which the drift of the rotor position is not too significant. This is illustrated with curve section 520 in Fig. 5. After a first predetermined period of time (100 ms in Fig. 5), the current supplied by the at least one other power converter to the generator is ramped down within a second predetermined period of time (step S33). By reducing the current supplied to generator 10, the torque generated by generator 10 is likewise gradually being reduced. This is illustrated with curve section 521 in Fig. 5. In this example, the slope of the current reduction is set such that the second predetermined period of time lasts for 100 ms; other slopes or times may be employed. In such implementation, the stop criterion of step S4 may for example be that the second predetermined period of time has lapsed, or that the current reaches a value of zero, or that the torque reaches a value of zero. Again, by such implementation of the method, the initial drop in torque can be reduced significantly, and the torque smoothly transitions to a value of zero.

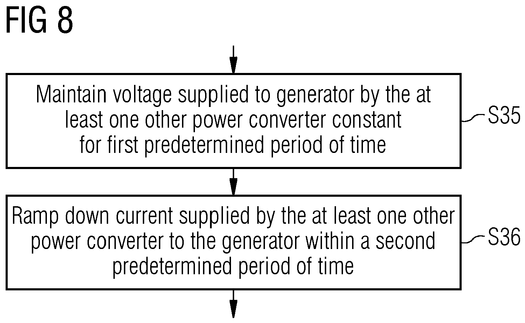

Fig. 8 illustrates a further exemplary implementation of step S3 of Fig. 3. The example of Fig. 8 is a combination of the exemplary methods of Figs. 6 and 7. In step S35, the voltage supplied to the generator by the at least one other power converter, e.g. power converter 21, is maintained constant for a first predetermined period of time. Step S35 thus essentially corresponds to step S31. The torque generated by generator 10 thus follows curve 510, as illustrated in Fig. 5, but only for the section 530 thereof. The first predetermined period of time is 100 ms in the example of Fig. 5. Subsequently, in step S36, the current supplied by the at least one other power converter to the generator is ramped down within a second predetermined period of time. Such ramping down of the current corresponds to step S33 of Fig. 7. Again, such ramping down of the current results in a corresponding gradual decreasing of the torque generated by generator 10, which is illustrated with curve 531 in Fig. 5.

The second predetermined period of time is selected to be 100 ms in the example of Fig. 5. Fig. 5 again shows a linear ramping down of the torque, however with a different slope than curve 521 of the example of Fig. 7. The stop criterion of step S4 may in such implementation of the method again be selected as an expiry of the second predetermined period of time, as the current reaching a value of zero, as the torque reaching a value of zero, or any other suitable parameter reaching or exceeding a threshold value. The method of Fig. 8 provides the advantage of having a robust control immediately after the occurrence of the failure of one power converter, while not requiring the detection of a zero-crossing of the torque. In particular, both the methods of Fig. 7 and 8 are relatively insensitive to the timing of the stopping of the supply of electrical power to the generator (step S5), in particular to stopping operation of power converter 20. The current ramp may for example be implemented by ramping down a current reference to a value of zero. Once the current reference has reached a value of zero, torque will no longer be generated by generator 10, so that the timing of the shutdown of power converter system 20 is not decisive.

It should be clear that the timing and the slope of the curves illustrated in Fig. 5 is only exemplary and that a different timing may be employed. Further, the control scheme may comprise different combinations of the steps of keeping the voltage constant, continuing operation in the particular operating mode and ramping down the current. Other implementations, such as ramping down a different operating parameter, are also conceivable. For the purpose of illustration, curve section 520 is shown as a straight line in Fig. 5. However, it should be clear that the generated torque may be affected by the disturbance of the control scheme due to the positional drift.

In a conventional system, the torque would drop to zero upon the occurrence of the fault. As can be seen in Fig. 5, the drop in torque is significantly reduced by each of the exemplary methods, and the torque is brought down to a zero value in a relatively smooth way, thus avoiding critical loading of the blade(s). By employing examples of the method, it may thus not be required to provide an additional tool for turning the rotor, and it may not be necessary to reinforce the rotor blades in order to withstand such critical loading. Upon the torque generated by generator 10 reaching a value of zero, the rotor will simply swing out under the gravitational torque and the experienced rotational friction and aerodynamic drag.

By the method, if a fault occurs on one of the converter channels, the torque on the remaining channels is thus not dropped to zero as well, compared to a conventional system where the default action of the electrical system is to stop switching. The present solution however prevents such default action and ensures that the remaining power converters continue operation and are then shut down in a manner that results in a significantly reduced loading of the blade or blades. This is achieved by a gradual reduction of the generated torque within a relatively short period of time, e.g. less than 1 second, before shutting down the converter system.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A method of operating a wind turbine for positioning a wind turbine rotor of the wind turbine, wherein the wind turbine (100) comprises an electrical generator (10) mechanically coupled to the wind turbine rotor (101) and a power converter system (20), wherein the power converter system (20) comprises at least two parallel power converters (21, 22) providing two parallel paths for exchanging electrical power with the electrical generator (10), wherein the method comprises:
- controlling the power converter system (20) to supply electrical power to the electrical generator (10) to operate the electrical generator as a motor, wherein the supply of electrical power is controlled such that the electrical generator (10) generates a torque that is applied to the wind turbine rotor (101) to position the wind turbine rotor; and
- upon detecting a failure of a power converter (21) of the power converter system (20), controlling the power converter system (20) to maintain operation of at least one other power converter (22) of the power converter system (20) to continue supplying electrical power to the electrical generator (10) to continue generating torque that is applied to the wind turbine rotor (101).

2. The method according to claim 1, wherein maintaining operation of the at least one other power converter (22) comprises controlling the providing of electrical power to the generator (10) by the at least one other power converter (22) to gradually reduce the generated torque applied by the generator to the wind turbine rotor (101).

3. The method according to claim 1 or 2, further comprising controlling the power converter system (20) to stop supplying electrical power to the generator (10) if a stop criterion is met, wherein the stop criterion is preferably at least one of:
- the torque generated by the generator (10) dropping below a threshold or reaching a value of zero;
- a passing of a predetermined period of time; or
- an operating parameter, in particular a current provided to the generator (10), dropping below a threshold or reaching a value of zero.

4. The method according to any of the preceding claims, wherein maintaining operation of the at least one other power converter (22) comprises controlling the at least one other power converter (22) to provide a constant voltage to the generator (10).

5. The method according to claim 4, wherein the constant voltage corresponds to a voltage that the at least one other power converter (22) has supplied to the generator (10) prior to the failure of the power converter (21).

6. The method according to claim 4 or 5, wherein the constant voltage is provided for a predetermined amount of time or until the torque generated by the generator (10) drops below a predetermined threshold or reaches zero.

7. The method according to any of claims 4-6, further comprising detecting or estimating a point in time at which the torque generated by the generator (10) reaches a value of zero and stopping the providing of electrical power by the at least one other power converter (22) to the generator (10) upon detecting the zero value of the generated torque.

8. The method according to any of the preceding claims, wherein maintaining operation of the at least one other power converter (22) comprises controlling the at least one other power converter (22) in accordance with an operating mode in which the power converter has been operated prior to detecting the failure.

9. The method according to claim 8, wherein the controlling of the at least one other power converter (22) in accordance with the operating mode is performed for a predetermined period of time, wherein the predetermined period of time is preferably smaller than 1s, 500ms, 300ms, or 200ms.

10. The method according to any of the preceding claims, wherein maintaining operation of the at least one other power converter (22) comprises controlling the at least one other power converter (22) to ramp down a current provided by the at least one other power converter (22) to the generator (10) .

11. The method according to claim 10, wherein the current is ramped down to below a threshold or to a value of zero, wherein the ramping down preferably occurs within a predetermined period of time, wherein the predetermined period of time is preferably smaller than 1s, 500ms, 300ms, or 200ms.

12. The method according to claim 10 or 11 when dependent directly or indirectly on claim 8 or 9, wherein maintaining operation of the at least one other power converter (22) comprises controlling the at least one other power converter (22) in accordance with the operating mode for a first predetermined period of time and ramping down a current provided by the at least one other power converter (22) to the generator (10) within a second predetermined period of time following the first predetermined period of time.

13. The method according to claim 10 or 11 when dependent directly or indirectly on any of claims 4-7, wherein maintaining operation of the at least one other power converter (22) comprises controlling the at least one other power converter (22) to provide the constant voltage to the generator (10) for a first period of time and ramping down a current provided by the at least one other power converter (22) to the generator (10) after the first period of time.

14. A control system configured to control the operation of a wind turbine, wherein the wind turbine (100) comprises a wind turbine rotor (101) comprising at least one or two rotor blades (102), an electrical generator (10) mechanically coupled to the wind turbine rotor (101), and a power converter system (20), wherein the power converter system (20) comprises at least two parallel power converters (21, 22) providing two parallel paths for exchanging electrical power with the electrical generator (10), wherein the control system (50) is configured to perform the method according to any of the preceding claims.

15. A computer program for controlling the operation of a wind turbine (100) that comprises a power converter system (20) having at least two parallel power converters (21, 22) that provide two parallel paths for exchanging electrical power with an electrical generator (10) of the wind turbine (100), wherein the computer program comprises control instructions which, when executed by a processing unit (51) of a control system (50) that controls the operation of the wind turbine (100), cause the processing unit (51) to perform the method of any one of claims 1 to 13.
